# EUROPEAN PATENT SPECIFICATION

(11) **EP 4 015 435 B1**
(45) Date of publication and mention of the grant of the patent: **28.01.2026**
(21) Application number: 20214334.3
(22) Date of filing: 15.12.2020
(51) Int. Cl.: B66C 23/20, F03D 13/00, B66C 13/06

(54) **METHOD AND GUIDE APPARATUS FOR GUIDING A LOAD BEING HOISTED BETWEEN A WIND TURBINE PLATFORM AND A NACELLE**
VERFAHREN UND FÜHRUNGSVORRICHTUNG ZUM FÜHREN EINER LAST ZWISCHEN EINER WINDTURBINENPLATTFORM UND EINER GONDEL
PROCÉDÉ ET APPAREIL DE GUIDAGE POUR GUIDER UNE CHARGE HISSÉE ENTRE UNE PLATE-FORME D'ÉOLIENNE ET UNE NACELLE

(43) Date of publication of application: 22.06.2022
(73) Proprietor: Ørsted Wind Power A/S, 7000 Fredericia (DK)
(72) Inventor: PEREYRA, Brandon, DK-2820 Gentofte (DK); WINDOLF, Mikkel Haugaard, DK-2820 Gentofte (DK); LE, Nina, DK-2820 Gentofte (DK); MAILEY, Stephen, Wirral, Merseyside CH41 1BE (GB); HOWITT, Jennifer, Wirral, Merseyside CH41 1BE (GB); SPEERS, Daniel, Wirral, Merseyside CH41 1BE (GB); ALMOND, James, Wirral, Merseyside CH41 1BE (GB)
(74) Representative: Gaunt, Thomas Derrick

(56) References cited:
- EP-A1- 2 586 933
- WO-A2-2020/177824
- WO-A2-2020/201237
- CN-U- 207 142 587
- DE-C1- 19 726 408
- ES-B1- 2 671 048
- US-A1- 2005 247 249
- US-A1- 2011 140 060

## Description

The present invention concerns a guide apparatus for guiding a load being hoisted between a wind turbine platform and a nacelle, and a method of using the same. In particular, this disclosure concerns a temporary guidewire apparatus for installation on a wind turbine and for use in conjunction with a nacelle crane for hoisting loads.

Once a wind turbine generator has been installed, it is sometimes necessary to lift components up to, and down from, the nacelle, for example for maintenance and repairs. For this purpose, it is common to provide a crane mechanism within the nacelle, which is accessible through a hatch in the lower face of the nacelle body. When components need to be lifted up to the nacelle, the hatch is opened and the crane line is lowered down to the wind turbine platform. A load may then be attached to the crane hook at the bottom of the line and then be hoisted up to the nacelle. Conversely, loads may also be lowered down from the nacelle using the crane.

A problem with conventional wind turbine crane mechanisms is that it can only be used in very low wind conditions. Under such low wind conditions, there is minimal risk of the cargo swinging excessively in the wind once it is suspended on the crane line. This represents a major limitation because wind turbine generators would normally be installed in windy locations. Consequently, hoisting operations will often be delayed until optimal wind conditions are prevalent and, in the case of offshore installations, this can necessitate significant expense as installation crews wait on standby for suitable conditions to arise.

WO 2020/177824 discloses a crane system for moving a burden, such as wind turbine component, between the nacelle or rotor of a wind turbine and a location at a lower end of the wind turbine at a distance from the wind turbine.

WO2020/201237 discloses a method of mounting a self-hoisting crane from the ground to the nacelle by operating a cable winch at ground whereby a cable extends from the crane to a roller at the nacelle.

Document ES2671048B1 discloses a method according to the preamble of claim 1 and the corresponding guide apparatus.

In view of the above, the present invention therefore seeks to address the above problem associated with conventional hoisting methods and apparatus.

According to a first aspect of the present invention, there is provided a method of installing a guide apparatus to guide a load being hoisted between a wind turbine platform and a nacelle of an offshore wind turbine generator, the method comprising the steps of: providing one or more guide wire assemblies on the wind turbine platform, each guide wire assembly comprising a nacelle coupling, a platform coupling, and a cable connecting therebetween; lowering a wind turbine crane from the nacelle and connecting the nacelle couplings to the wind turbine crane; raising the wind turbine crane to lift the nacelle couplings up to the nacelle, and connecting the nacelle coupling to respective anchor points in the nacelle; connecting the platform couplings to the wind turbine platform; pulling each cable taut using a tensioner provided in one of its respective nacelle or platform couplings; attaching a harness to the load, and slidably tethering the harness to the cables using one or more slidable couplings for restraining lateral movement of the load relative to the cables as it is hoisted.

In this way, a temporary guide apparatus may be quickly installed using an existing nacelle crane mechanism. The one or more guide wire cables act to restrain lateral movement of the load while it is suspended. In preferred embodiments, first and second guide wire assemblies are provided. In such arrangements, the spacing between the two cables may prevent rotational displacement of the load. These arrangements may thereby allow loads to be hoisted up to, or down from, the nacelle in higher wind speeds than would otherwise be safely possible. Furthermore, as the guide wire cables themselves do not need to bear the weight of the load, they may be relatively lightweight for facilitating easy temporary deployment.

In embodiments, the step of connecting the nacelle couplings to the wind turbine crane hook comprises connecting a hoisting part of each nacelle coupling to the wind turbine crane hook; and the step of connecting the nacelle couplings to respective anchor points in the nacelle comprises connecting an anchor part of each nacelle coupling to the respective anchor point, wherein the anchor part is connected to the respective anchor point while the hoisting part is connected to the wind turbine crane hook. In this way, the guide apparatus allows the nacelle couplings to be securely and safely lifted up and attached to their respective anchor points in the nacelle.

In embodiments, the step of connecting the nacelle coupling to respective anchor points in the nacelle comprises disconnecting the hoisting parts from the wind turbine crane hook once the anchor parts are connected to the respective anchor points. In this way, the crane hook may be detached from the guide apparatus in preparation for a hoisting operation.

In embodiments, the step of connecting the platform couplings to the wind turbine platform comprises connecting a railing loop of each platform coupling around a beam of a railing on the wind turbine platform for anchoring the cable to the railing. In this way, each guide wire apparatus may be anchored to the wind turbine platform using existing structures on the wind turbine platform. This may allow the guide apparatus to be installed on a greater variety of wind turbine generator installations. In embodiments, the step of connecting the railing loop comprises connecting the railing loop around a vertical beam and beneath a footplate of the railing. In embodiments, the footplate is secured to the vertical beam by a bolt, and preferably the bolt is an M16 bolt or higher. In this way, a secure platform anchor may be formed for facilitating hoisting operations in wind speeds of up to 30m/s.

In embodiments, the step of connecting the platform couplings to the wind turbine platform comprises anchoring each platform coupling to an anchor point on the wind turbine platform. In this way, a pre-existing anchor point in the wind turbine platform may be used.

In embodiments, the step of anchoring each platform coupling comprises securing a base to an anchor point on the wind turbine platform using an anchor connector provided on the base; and connecting the platform couplings of the one or more guide wire assemblies respectively to the one or more coupling connectors provided on the base. In this way, a single pre-existing anchor point may be used to provide two spaced anchor points for the platform couplings.

According to a second aspect of the invention, there is provided guide apparatus for guiding a load hoisted between a wind turbine platform and a nacelle, the apparatus comprising: one or more guide wire assemblies each comprising a nacelle coupling for connection to an anchor point in the nacelle, a platform coupling for connection to the wind turbine platform, and a cable connecting between the nacelle coupling and the platform coupling, wherein one of the nacelle coupling and the platform coupling comprises a tensioner for pulling the cable taut between its nacelle and platform couplings; and a harness for attachment to the load and comprising one or more slidable couplings for slidably tethering the load to the cables of the one or more guide wire assemblies, respectively, for restraining its lateral movement relative to the cables as it is hoisted.

In preferred embodiments, first and second guide wire assemblies are provided. The use of two guide wire assemblies helps to prevent rotation of the load as it is hoisted, and thereby mitigate the risk of entanglement of the crane line.

In embodiments, the nacelle couplings each comprise a hoisting part for connection to a wind turbine crane hook and an anchor part, wherein the hoisting part and the anchor part are configured such that the anchor part may be connected to the anchor point while the hoisting part is connected to the wind turbine crane hook.

In embodiments, the hoisting and anchor parts comprise at least one of a hook and a gromet loop.

In embodiments, the platform couplings each comprise a railing loop connectable around a beam of a railing on the wind turbine platform for anchoring the cable to the railing.

In embodiments, the platform couplings each comprise a loop fastener for fastening the railing loop around the beam of the railing. In this way, the railing loop may be quickly secured around the railing during use.

In embodiments, the step of connecting the platform couplings to the wind turbine platform comprises anchoring each platform coupling to an anchor point on the wind turbine platform. In this way, a pre-existing anchor point in the wind turbine platform may be used.

In embodiments, the step of anchoring each platform coupling comprises securing a base to an anchor point on the wind turbine platform using an anchor connector provided on the base; and connecting the platform couplings of the one or more guide wire assemblies respectively to the one or more coupling connectors provided on the base. In this way, a single pre-existing anchor point may be used to provide two spaced anchor points for the platform couplings.

According to a second aspect of the invention, there is provided an offshore wind turbine generator for use in the above method, the apparatus comprising: one or more guide wire assemblies each comprising a nacelle coupling for connection to an anchor point in the nacelle, a platform coupling for connection to the wind turbine platform, and a cable connecting between the nacelle coupling and the platform coupling, wherein one of the nacelle coupling and the platform coupling comprises a tensioner for pulling the cable taut between its nacelle and platform couplings; and a harness for attachment to the load and comprising one or more slidable couplings for slidably tethering the load to the cables of the modulus of 113 GPa may be provided for improved frequency response, at the same time as providing a lightweight and strong guide wire cable. In preferred embodiments, the Dyneema rope is coated in a protective sheath, which may be 2mm thick.

In embodiments, there is further provided a protective member securable to the crane hook for absorbing lateral impacts thereto. The protective member may be secured to a knuckle part of the crane hook. In this way, impact damage which could otherwise arise from lateral movement of the crane hook in the wind is mitigated. The protective member may comprise a compressible ring securable around the body of the crane hook knuckle. In other arrangements, the protective member may comprise a sock or skirt secured to the crane hook. The protective member may be formed of rubber or other polymer for absorbing shock impacts.

Illustrative embodiments of the present invention will now be described with reference to the accompanying drawings, in which:
Figure 1 shows a schematic illustration of a guide apparatus according to a first embodiment of the invention once fitted to a wind turbine generator;
Figure 2 shows a nacelle coupling part of the guide apparatus shown in Figure 1;
Figure 3 shows a platform coupling part of the guide apparatus shown in Figure 1;
Figure 4 shows an alternative platform anchor point according to a further embodiment;
Figure 5 shows a cross sectional view of a nacelle once the guide apparatus has been installed;
Figure 6 shows a schematic illustration of a harness part of the guide apparatus shown in Figure 1; and
Figures 7(a)-(h) shows the steps of using the guide apparatus shown in Figure 1.

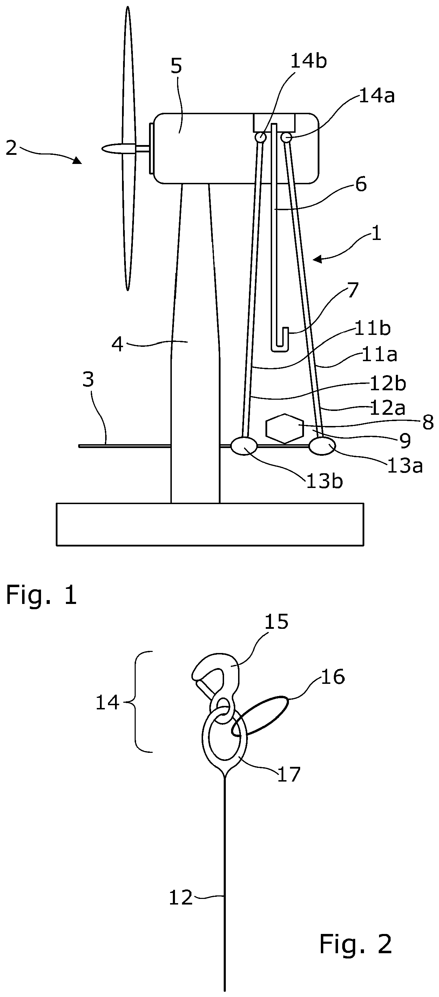

Figure 1 shows a schematic illustration of a guide apparatus 1 according to a first embodiment of the invention. The guide apparatus 1 is fitted to a wind turbine generator 2, which comprises a platform 3, a tower 4 and a nacelle 5 which supports a rotor at the top of the tower 4. The nacelle 5 comprises a crane whose hoisting line 6 may be lowered through a hatch in the nacelle body. The distal end of the crane line 6 comprises a hook 7 which can be connected to a load 8 for hoisting it from the platform 3 to the nacelle 5.

The guide apparatus 1 comprises first and second guide wires assemblies 11a and 11b. Each guide wire assembly 11 comprises a guide wire 12a,12b connected between a platform coupling part 13a,13b and a nacelle coupling part 14a,14b. The platform coupling parts 13a,13b connect their respective guide wires 12a,12b to the platform at their bottom ends. The nacelle coupling parts 14a,14b connect their respective guide wires 12a,12b to the nacelle 5 at their top ends. Once connected, the guide wires 12a,12b are suspended either side of the crane line 6. The guide apparatus 1 further comprises a load harness 9 for slidably tethering the load 8 to the guide wires 12a, 12b. As such, when a load 8 hoisted on the crane line 6, it is lifted between the guide wires 12a,12b, with the harness 9 resisting the lateral movement of the load 8.

In this embodiment, the guide wires 12a,12b are formed of 6mm Dyneema (RTM) rope having a Young's modulus of 113 GPa. In other preferred embodiments, the Young's modulus of the guide wire is in the range of 90-130 GPa. As such, the relatively high stiffness of the guide wires minimises lateral displacement of the load as it is hoisted up. In addition, guide wires with a modulus of elasticity within the above range of 90-130 GPa have a higher natural frequency, which shifts the overall natural frequency of the guide wire assemblies 11a,11b higher and away from the peak of the kaimal spectrum associated with wind turbulence. As a result, the system is less sensitive to resonance than conventional hoisting arrangements.

Figure 2 shows one of the nacelle coupling parts 14 provided at the upper end of one of the guide wires 12. The nacelle coupling part 14 comprises a hub gromet loop 17 which connects to an anchor hook 15 and a hoisting loop 16. During installation of the guide wire assemblies 11a,11b, the hoisting loop 16 are used to connect to the respective guide wires 12 to the crane hook 7 for lifting the upper ends to the nacelle 5. Once lifted, each anchor hook 15 is used to connect the respective guide wire 12 to a respective anchor point in the nacelle 5, as is described in further detail below.

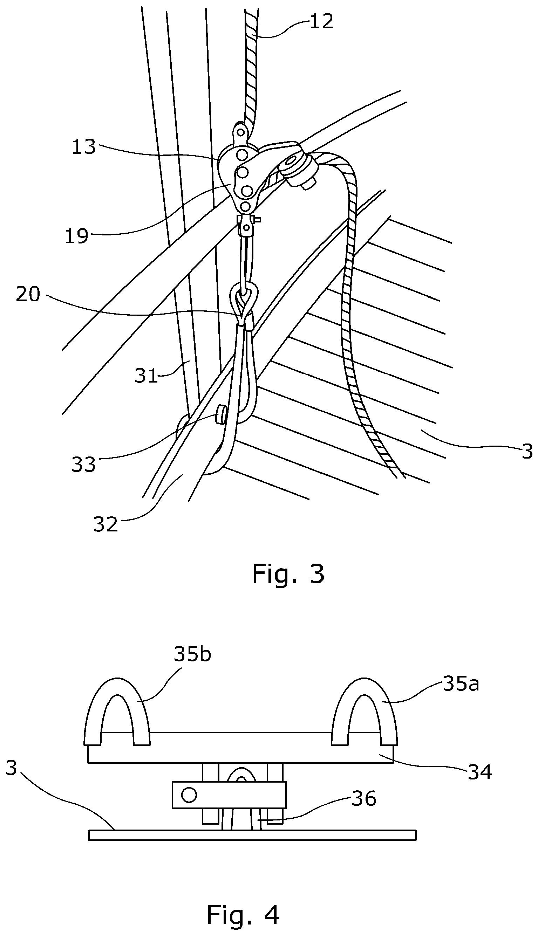

Figure 3 shows one of the platform coupling parts 13 provided at the lower end of one of the guide wires 12. The platform coupling part 13 comprises a tensioner 19 connected to an anchor loop 20 which can be looped around a vertical beam 31 of the platform's handrail, beneath the footplate 32. This thereby provides a convenient anchor point to the platform 3, without requiring a pre-existing anchor point to be available. Once the anchor loop has been secured 20, the tensioner 19 may be used to remove the slack from the guide wire 12 by pulling the free end. Although in this illustrative embodiment a manual pull tensioner 19 is shown, it will be understood that a mechanically operable tensioner may be used. However, with such arrangements, it is preferable to provide an inline tension gauge for preventing over tensioning of the guide wires 12.

With regard to the anchor point position, this is selected to loop around the vertical beam 31 at a location where the footplate 32 is connected to the vertical beam 31 through an M16 8.8 bolt 33. When the respective guide wire 12 is displaced laterally during hoisting, a vertical pull load is applied through the anchor loop 20 to the footplate 32, which applies as a shear force through the bolt 33. Whilst forces are also applied to other parts of the handrail, the bolt 33 is subjected to the highest force relative to its load bearing capacity. The M16 8.8 bolt may have a specified maximum load bearing capacity of around 43.6kN before yielding. This therefore provides, in principle, sufficient anchoring capacity for wind speeds up to 70m/s, assuming the surface area of the load 8 was less than 1.22m² (corresponding to two delta module bags). Thicker or higher-grade bolts may provide even better anchoring performance. However, in practice, safe operating wind speeds may be limited to speeds of up to 30 m/s and preferably up to 25 m/s since higher tensile loads applied through the guide wires 12 may risk yielding of other components.

Figure 4 shows an alternative anchor point arrangement in which the wind turbine generator platform 3 has a pre-existing anchor point 36. In this scenario, an anchor body 34 is fixed to the pre-existing anchor point 36 and comprises two anchor points 35a,35b provided at either side of the body 34. The two anchor points 35a,35b are thereby separated for spacing the two guide wires 12a,12b sufficiently to allow the load 8 to be located between them. With such an arrangement, the tensioners 19 of the first and second guide wire assemblies 11a,11b are connected to the anchor points 35a,35b, respectively. In preferred embodiments, the distance between the anchor points 35a,35b is in the range of 800 - 1600 mm, and more preferably 1300-1500mm. In a preferred embodiment, this distance between the anchor points is 1400mm. The distance between the anchor points may correspond to the distance between the two guide wires 12a, 12b.

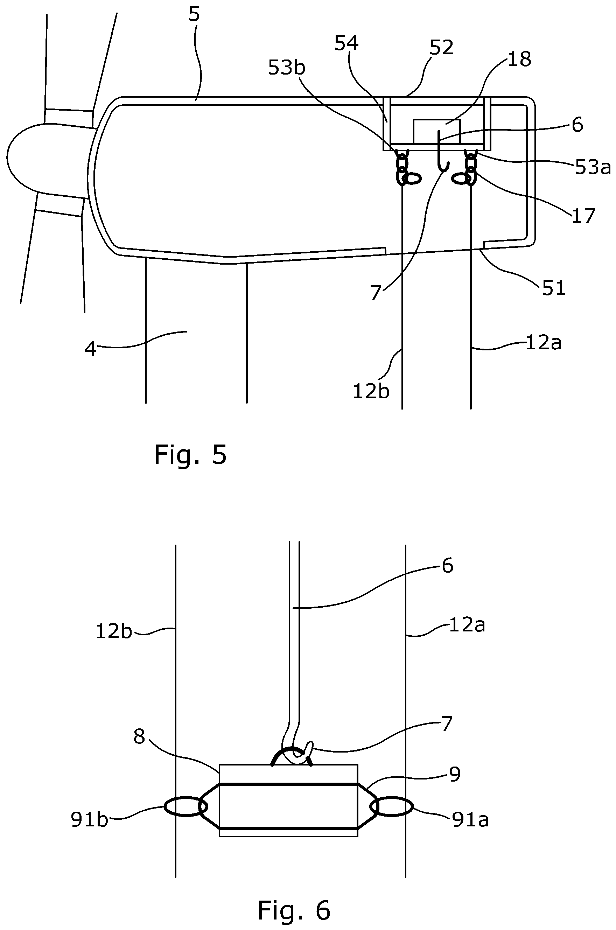

Figure 5 shows a cross sectional view of a nacelle 5 once the guide apparatus 1 has been installed. The interior of the nacelle 5 is accessible through a hatch 51 provided in the bottom of its housing 52. This allows the guide wires 12a,12b to be fed up from the platform 3 and connect to the nacelle anchor points 53a,53b which are provided on the nacelle frame 54 adjacent to the top of the nacelle, and spaced apart so that they are above opposite sides of the hatch 51. The nacelle frame 54 also supports the crane winch 18 for lowing the crane line 6 through the hatch 51.

In this embodiment, the nacelle anchor points 53a,53b are provided as pre-existing anchor points on the nacelle frame 54. However, in other embodiments, the nacelle anchor points 53a,53b may be formed, for example, by choking a structural part of the nacelle assembly with a sling having a crane hook slotted through the captive eye of the hook. For instance, one sling may be choked to a beam within the nacelle, and another sling may be choked to the lifting point of the nacelle's gearbox for thereby providing two separated nacelle anchor points 53a,53b. Preferably, the distance between the two nacelle anchor points 53a,53b substantially corresponds to the distance between the two platform anchor points.

Figure 6 shows a schematic illustration of the harness part 9 of the guide apparatus 1 for securing around the load 8. The harness part 9 comprises a first lateral tether 91a on one side, and second lateral tether 91b on the other side. The lateral tethers 91a,91b each comprise a gated loop, such as a carabiner, which can be attached to their respective first and second guide wires 12a,12b to form a slidable coupling. As such, the lateral tethers 91 act to restrict lateral movement of the load 8 relative to the guide wires 12a,12b, whilst allowing the load to be moved vertically relative to the guide wires 12a,12b. In preferred embodiments, the lateral tethers 91a,91b each comprise a sling which is choked to the main body of the harness 9 and, at its distal end, is manufactured through the body of a captive bar carabiner such that the carabiner part cannot be separated from the sling or the body of the harness 9. The captive bar carabiners may thereby form the slidable coupling. At the same time, the connection through the sling prevents the tether from being accidentally detached from the load 8 and dropped once lifted at the nacelle 5.

In addition to the above, in preferred embodiments, the crane hook 7 shown in Figure 6 may further comprise a weighted knuckle which is used to connect the hook 7 to the crane line 6 and helps to damp movement of the line 6 in the wind. The knuckle may be provided with a rubber protective member formed as a band secured around its outer circumference for mitigating any impact damage to the tower 4 or the nacelle 5 which could be caused if the crane hook begins to swing in the wind.

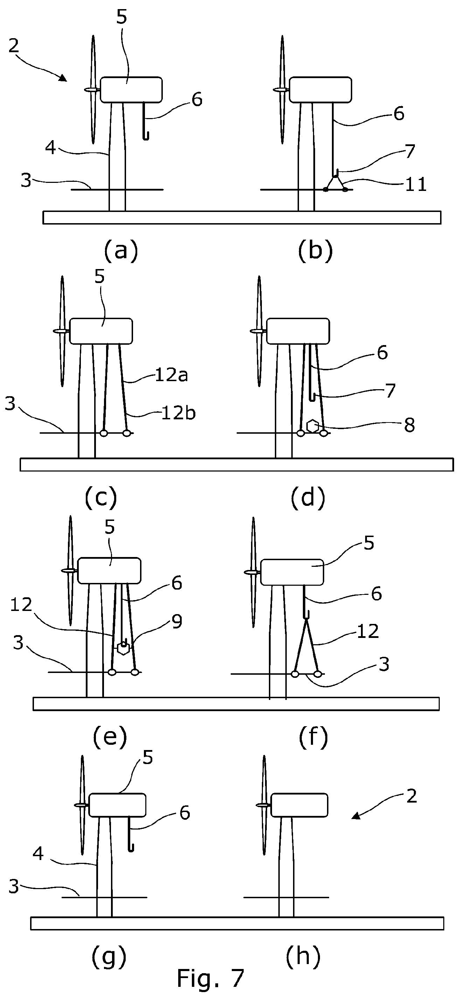

In use, the guide apparatus 1 may be transported to the wind turbine generator 2 as shown in Figures 7(a). At this stage, the yaw of the nacelle 5 is locked to secure its rotational position relative to the platform 3, and the rotor may be throttled down from an operational state by adjusting the pitch of the rotor blades. Preferably, the nacelle 5 is yawed such that the crane hatch 51 is located behind the tower 4 in the direction of the wind. The crane line 6 may then be lowered from the nacelle 5 down to the platform 3.

As shown in Figure 7(b), the first and second guide wire assemblies 11 are connected to the crane line 6 by attaching their hoisting loops 16 to the crane hook 7. The free ends of the guide wire assemblies 11 are held in deployment bags placed on the platform 3 and are unanchored at this stage.

The crane line 6 is then retracted up to the nacelle 5, thereby lifting the guide wires 12 to the position shown in Figure 7(c). Within the nacelle 5, the anchor hooks 15 of each guide wire assembly 11 may then be connected in turn to the nacelle anchor points 53 within the housing 52 while still attached to the crane hook 7. Once attached, the hoisting loops 16 can then be detached from the crane hook 7, to thereby free the crane line 6 to allow it to again be lowered to the platform 3 to pick up the load 8, as shown in Figure 7(d).

The platform couplings may then be attached to the platform 3. In this embodiment, this is achieved by attaching the anchor loops 20 respectively around two adjacent railing beams 31, in line with that shown in Figure 3. The guide wires 12 may then be manually tightened using the tensioners 19 to remove slack between their anchor points on the platform and the nacelle.

The harness 9 may be secured around the load 8, and the lateral tethers are secured to the guide wires 12. The crane hook 7 may then be secured to the load to allow it to be hoisted up, as shown in Figure 7(e). As the guide wires 12 are taut, lateral movement of the load 8 is restricted by their slidable connection though the harness 9.

Once the load 8 has been lifted to the nacelle 5, the load 8 and the harness 9 may be detached from the guide wires 12 by removing the first lateral tether 91a and then the second lateral tether 91b. The load 8 may then be placed in the desired location within the nacelle body 52, and the crane hook 7 can then be detached. The hoisting loops 16 may be reconnected to the crane hook 7 and then the anchor hooks 15 can be detached from the nacelle anchor points 53a,53b. The harness 9 may also be secured to the crane hook. The crane line 6 may then be lowered, as shown in Figure 7(f), to return the wire guide assemblies 11 and harness 9 to the platform 3. The guide apparatus 1 may then be loaded back into the deployment bags. As shown in Figure 7(g), the crane wire 6 may then be retracted and then the hatch 51 closed and the yaw of the nacelle 5 may be released and the wind turbine generate may be throttled up back to an operational state with the blades rotating at speed, as shown in Figure 7(h).

In this way, embodiments of the invention may allow loads to be hoisted up to, and down from, a wind turbine nacelle in higher winds than would otherwise be safe.

It will be understood that the embodiments illustrated above shows an application of the invention only for the purposes of illustration. In practice the invention may be applied to many different configurations, the detailed embodiments being straightforward for those skilled in the art to implement.

For example, it will be understood that embodiments of the invention may be used for hoisting various types of loads up to and down from the nacelle. For instance, in addition to hoisting parts for servicing operations, the method and apparatus may also be used for emergency evacuation. In such a case, the load may be a technician bound to a stretcher, with the stretcher then being tethered to the guidewires to restrict its lateral movement in the wind as the individual is hoisted down to the wind turbine platform. Such a use would naturally necessitate thorough testing of the apparatus to ensure the overall safety of the method and the technician in this situation.

## Claims

1. A method of installing a guide apparatus (1) to guide a load (8) being hoisted between a wind turbine platform (3) and a nacelle (5) of an offshore wind turbine generator (2), the method comprising the steps of:
providing one or more guide wire assemblies (11a,11b) on the wind turbine platform (3), each guide wire assembly comprising a nacelle coupling (14a,14b), a platform coupling (13a,13b), and a cable (12a,12b) connecting therebetween;
lowering a wind turbine crane (6) from the nacelle (5) and connecting the nacelle couplings (14a,14b) to the wind turbine crane (6);
raising the wind turbine crane (6) to lift the nacelle couplings (14a,14b) up to the nacelle (5), and connecting the nacelle coupling (14a,14b) to respective anchor points in the nacelle (5);
connecting the platform couplings (13a,13b) to the wind turbine platform (3);
attaching a harness (9) to the load (8), and slidably tethering the harness to the cables using one or more slidable couplings (91a, 91b) for restraining lateral movement of the load (8) relative to the cables (12a,12b) as it is hoisted, the method **characterised by**
pulling each cable (12a,12b) taut using a tensioner (19) provided in one of its respective nacelle or platform couplings.

2. A method according to claim 1, wherein the step of connecting the nacelle couplings (14a,14b) to the wind turbine crane hook (7) comprises connecting a hoisting part (16) of each nacelle coupling (14a,14b) to the wind turbine crane hook (7); and
the step of connecting the nacelle couplings (14a,14b) to respective anchor points in the nacelle (5) comprises connecting an anchor part (15) of each nacelle coupling (14a,14b) to the respective anchor point,
wherein the anchor part (15) is connected to the respective anchor point while the hoisting part (16) is connected to the wind turbine crane hook (7).

3. A method according to claim 2, wherein the step of connecting the nacelle coupling (14a,14b) to respective anchor points in the nacelle comprises disconnecting the hoisting parts (16) from the wind turbine crane hook (7) once the anchor parts (15) are connected to the respective anchor points.

4. A method according to any preceding claim, wherein the step of connecting the platform couplings (13a,13b) to the wind turbine platform (3) comprises connecting a railing loop (20) of each platform coupling around a beam (31) of a railing on the wind turbine platform (3) for anchoring the cable (12a,12b) to the railing.

5. A method according to any of claims 1-3, wherein the step of connecting the platform couplings (13a,13b) to the wind turbine platform (3) comprises anchoring each platform coupling to an anchor point (36) on the wind turbine platform.

6. A method according to claim 5, wherein the step of anchoring each platform coupling (13a,13b) comprises securing a base (34) to an anchor point (36) on the wind turbine platform (3) using an anchor connector provided on the base (34); and
connecting the platform couplings (13a,13b) of one or more guide wire assemblies respectively to one or more coupling connectors (35a,35b) provided on the base.

7. An offshore wind turbine generator guide apparatus for use in the method of any preceding claim, the apparatus comprising:
one or more guide wire assemblies (11a,11b) each comprising a nacelle coupling (14a,14b) for connection to an anchor point in the nacelle, a platform coupling (13a,13b) for connection to the wind turbine platform, and a cable (12a,12b) connecting between the nacelle coupling and the platform coupling, wherein one of the nacelle coupling (14a,14b) and the platform coupling (13a,13b) comprises a tensioner (19) for pulling the cable (12a,12b) taut between its nacelle and platform couplings; and
a harness (9) for attachment to the load (8) and comprising one or more slidable couplings (91a,91b) for slidably tethering the load to the cables of the one or more guide wire assemblies (11a,11b), respectively, for restraining its lateral movement relative to the cables as it is hoisted.

8. An offshore wind turbine generator guide apparatus according to claim 7, wherein the one or more guide wire assemblies (11a,11b) comprise first and second guide wire assemblies.

9. An offshore wind turbine generator guide apparatus according to claim 7 or 8, wherein the nacelle couplings (14a,14b) each comprise a hoisting part (16) for connection to a wind turbine crane hook (7) and an anchor part (15), wherein the hoisting part and the anchor part are configured such that the anchor part may be connected to the anchor point while the hoisting part is connected to the wind turbine crane hook.

10. An offshore wind turbine generator guide apparatus according to claim 9, wherein the hoisting (16) and anchor (16) parts comprise at least one of a hook and a gromet loop.

11. An offshore wind turbine generator guide apparatus according to claim of claims 7-10, wherein the platform couplings (13a,13b) each comprise a railing loop (20) connectable around a beam (31) of a railing on the wind turbine platform (3) for anchoring the cable (12a,12b) to the railing.

12. An offshore wind turbine generator guide apparatus according to claim 11, wherein the platform couplings (13a,13b) each comprise a loop fastener for fastening the railing loop around the beam (31) of the railing.

13. An offshore wind turbine generator guide apparatus according to any one of claims 7-10, further comprising a base (34) having an anchor connector for securing the base to an anchor point (36) on the wind turbine platform, and one or more coupling connectors (35a,35b) for connection to the platform couplings (13a,13b) of the one or more guide wire assemblies, respectively.

14. An offshore wind turbine generator guide apparatus according to claim 13, wherein a first coupling connector (35a) is provided on a first side of the base (34) and a second coupling (35b) connector is provided on a second side of the base (34), distal to the first side.

15. An offshore wind turbine generator guide apparatus according to any one of claims 7-13, wherein the cables (12a,12b) of the one or more guide wire assemblies (11a,11b) are formed of a cable having a young's modulus in the range of 90-130 GPa.

## Patentansprüche

1. Verfahren zum Installieren einer Führungsvorrichtung (1), um eine Last (8), die zwischen einer Windturbinenplattform (3) und einer Gondel (5) eines Offshore-Windturbinengenerators (2) angehoben wird, zu führen, wobei das Verfahren die folgenden Schritte umfasst:
Bereitstellen einer oder mehrerer Führungskabelanordnungen (11a,11b) an der Windturbinenplattform (3), wobei jede Führungskabelanordnung eine Gondelkupplung (14a,14b), eine Plattformkupplung (13a,13b) und ein Kabel (12a,12b), das dazwischen verbunden ist, umfasst;
Absenken eines Windturbinenkrans (6) von der Gondel (5) und Verbinden der Gondelkupplungen (14a,14b) mit dem Windturbinenkran (6);
Anheben des Windturbinenkrans (6), um die Gondelkupplungen (14a,14b) zu der Gondel (5) anzuheben, und Verbinden der Gondelkupplung (14a,14b) mit den entsprechenden Verankerungspunkten an der Gondel (5);
Verbinden der Plattformkupplungen (13a,13b) mit der Windturbinenplattform (3);
Befestigen eines Tragegurts (9) an der Last (8) und verschiebbares Anbinden des Tragegurts an den Kabeln unter Verwendung einer oder mehrerer verschiebbarer Kupplungen (91a, 91b), um eine seitliche Bewegung der Last (8) relativ zu den Kabeln (12a,12b) einzuschränken, wenn sie hochgehoben wird, das Verfahren **gekennzeichnet durch** Straffziehen jedes Kabels (12a,12b) unter Verwendung einer Spannvorrichtung (19), die entweder an den entsprechenden Gondelkupplungen oder den Plattformkupplungen bereitgestellt ist.

2. Verfahren nach Anspruch 1, wobei der Schritt des Verbindens der Gondelkupplungen (14a,14b) mit dem Haken (7) des Windturbinenkrans das Verbinden eines Hebeteils (16) jeder Gondelkupplung (14a, 14b) mit dem Haken (7) des Windturbinenkrans umfasst; und
der Schritt des Verbindens der Gondelkupplungen (14a,14b) mit den entsprechenden Verankerungspunkten an der Gondel (5) das Verbinden eines Verankerungsteils (15) jeder Gondelkupplung (14a,14b) mit dem entsprechenden Verankerungspunkt umfasst,
wobei das Verankerungsteil (15) mit dem entsprechenden Verankerungspunkt verbunden ist, während das Hebeteil (16) mit dem Haken (7) des Windturbinenkrans verbunden ist.

3. Verfahren nach Anspruch 2, wobei der Schritt des Verbindens der Gondelkupplung (14a,14b) mit den entsprechenden Verankerungspunkten an der Gondel das Abtrennen der Hebeteile (16) von dem Haken (7) des Windturbinenkrans umfasst, sobald die Verankerungsteile (15) mit den entsprechenden Verankerungspunkten verbunden sind.

4. Verfahren nach einem der vorstehenden Ansprüche, wobei der Schritt des Verbindens der Plattformkupplungen (13a,13b) mit der Windturbinenplattform (3) das Anbringen einer Geländerschlaufe (20) jeder Plattformkupplung um einen Holm (31) an einem Geländer an der Windturbinenplattform (3) umfasst, um das Kabel (12a,12b) an dem Geländer zu befestigen.

5. Verfahren nach einem der Ansprüche 1 bis 3, wobei der Schritt des Verbindens der Plattformkupplungen (13a,13b) mit der Windturbinenplattform (3) das Verankern jeder Plattformkupplung an einem Verankerungspunkt (36) an der Windturbinenplattform umfasst.

6. Verfahren nach Anspruch 5, wobei der Schritt des Verankerns jeder Plattformkupplung (13a,13b) das Befestigen einer Basis (34) an einem Verankerungspunkt (36) an der Windturbinenplattform (3) unter Verwendung eines an der Basis (34) bereitgestellten Anschlagmittels umfasst; und
das Verbinden der Plattformkupplungen (13a,13b) einer bzw. mehrerer Führungskabelanordnungen mit einem oder mehreren Anschlusskupplungen (35a,35b), die an der Basis bereitgestellt sind.

7. Führungsvorrichtung für einen Offshore-Windturbinengenerator zur Verwendung in dem Verfahren eines der vorstehenden Ansprüche, die Vorrichtung umfassend:
eine oder mehrere Führungskabelanordnungen (11a,11b), die jeweils eine Gondelkupplung (14a,14b) für eine Verbindung mit einem Verankerungspunkt an der Gondel umfassen, eine Plattformkupplung (13a,13b) für eine Verbindung mit der Windturbinenplattform und ein Kabel (12a,12b) zum Verbinden zwischen der Gondelkupplung und der Plattformkupplung, wobei entweder die Gondelkupplung (14a, 14b) oder die Plattformkupplung (13a,13b) eine Spannvorrichtung (19) umfassen, um das Kabel (12a,12b) zwischen den Gondelkupplungen und den Plattformkupplungen straffzuziehen; und
einen Tragegurt (9) für eine Befestigung der Last (8) und umfassend eine oder mehrere verschiebbare Kupplungen (91a,91b), um die Last verschiebbar an den Kabeln der einen bzw. den mehreren Führungskabelanordnungen (11a,11b) anzubinden, um ihre seitliche Bewegung beim Anheben relativ zu den Kabeln einzuschränken.

8. Führungsvorrichtung eines Offshore-Windturbinengenerators nach Anspruch 7, wobei die eine oder die mehreren Führungskabelanordnungen (11a,11b) erste und zweite Führungskabelanordnungen umfassen.

9. Führungsvorrichtung eines Offshore-Windturbinengenerators nach Anspruch 7 oder 8, wobei die Gondelkupplungen (14a,14b) jeweils einen Hebeteil (16) für das Verbinden mit einem Haken (7) eines Windturbinenkrans und einem Verankerungsteil (15) umfassen, wobei das Hebeteil und das Verankerungsteil so konfiguriert sind, dass das Verankerungsteil mit dem Verankerungspunkt verbunden werden kann, während das Hebeteil mit dem Haken des Windturbinenkrans verbunden wird.

10. Führungsvorrichtung eines Offshore-Windturbinengenerators nach Anspruch 9, wobei die Hebe- (16) und Verankerungsteile (16) mindestens entweder einen Haken oder eine Gummischlaufe umfassen.

11. Führungsvorrichtung eines Offshore-Windturbinengenerators nach einem Anspruch der Ansprüche 7 bis 10, wobei die Plattformkupplungen (13a,13b) jeweils eine Geländerschlaufe (20) umfassen, die um einen Holm (31) eines Geländers an der Windturbinenplattform (3) verbindbar ist, um das Kabel (12a,12b) an dem Geländer zu befestigen.

12. Führungsvorrichtung eines Windturbinengenerators nach Anspruch 11, wobei die Plattformkupplungen (13a,13b) jeweils eine Schlaufenbefestigungsvorrichtung umfassen, um die Geländerschlaufe um den Holm (31) des Geländers zu befestigen.

13. Führungsvorrichtung eines Offshore-Windturbinengenerators nach einem der Ansprüche 7 bis 10, ferner umfassend eine Basis (34) mit einem Anschlagmittel für das Befestigen der Basis an einem Verankerungspunkt (36) an der Windturbinenplattform und eine oder mehrere Anschlusskupplungen (35a,35b) zum Verbinden mit den Plattformkupplungen (13a,13b) des einen bzw. den mehreren Führungskabelanordnungen.

14. Führungsvorrichtung eines Offshore-Windturbinengenerators nach Anspruch 13, wobei eine erste Anschlusskupplung (35a) an einer ersten Seite der Basis (34) und eine zweite Anschlusskupplung (35b) an einer zweiten Seite der Basis (34), distal von der ersten Seite, bereitgestellt ist.

15. Führungsvorrichtung eines Offshore-Windturbinengenerators nach einem der Ansprüche 7 bis 13, wobei die Kabel (12a,12b) der einen oder der mehreren Führungskabelanordnungen (11a,11b) nach einem Kabel geformt sind, das einen Youngschen Modul im Bereich 90-130 GPa aufweist.

## Revendications

1. Procédé d'installation d'un appareil de guidage (1) pour guider une charge (8) étant hissée entre une plateforme d'éolienne (3) et une nacelle (5) d'un générateur d'éolienne en mer (2), le procédé comprenant les étapes consistant à :
fournir un ou plusieurs ensembles de fils de guidage (11a, 11b) sur la plateforme d'éolienne (3), chaque ensemble de fils de guidage comprenant un accouplement de nacelle (14a, 14b), un accouplement de plateforme (13a, 13b) et un câble (12a, 12b) les reliant entre eux ;
abaisser une grue d'éolienne (6) à partir de la nacelle (5) et relier les accouplements de nacelle (14a, 14b) à la grue d'éolienne (6) ;
lever la grue d'éolienne (6) pour soulever les accouplements de nacelle (14a, 14b) jusqu'à la nacelle (5), et relier l'accouplement de nacelle (14a, 14b) aux points d'ancrage respectifs dans la nacelle (5) ;
relier les accouplements de plateforme (13a, 13b) à la plateforme d'éolienne (3) ;
fixer un harnais (9) à la charge (8) et amarrer de manière coulissante le harnais aux câbles au moyen d'un ou de plusieurs accouplements coulissants (91a, 91b) destinés à limiter le mouvement latéral de la charge (8) par rapport aux câbles (12a, 12b) lorsqu'elle est hissée, le procédé étant caractérisé en tirant chaque câble (12a, 12b) tendu à l'aide d'un tendeur (19) situé dans l'un de ses accouplements de nacelle ou de plateforme respectifs.

2. Procédé selon la revendication 1, dans lequel l'étape de liaison des accouplements de nacelle (14a, 14b) au crochet de grue d'éolienne (7) comprend la liaison d'une pièce de hissage (16) de chaque accouplement de nacelle (14a, 14b) au crochet de grue d'éolienne (7) ; et
l'étape de liaison des accouplements de nacelle (14a, 14b) aux points d'ancrage respectifs dans la nacelle (5) comprend la liaison d'une pièce d'ancrage (15) à partir de chaque accouplement de nacelle (14a, 14b) au point d'ancrage respectif,
dans lequel la pièce d'ancrage (15) est reliée au point d'ancrage respectif pendant que la pièce de hissage (16) est reliée au crochet de grue d'éolienne (7).

3. Procédé selon la revendication 2, dans lequel l'étape de liaison de l'accouplement de nacelle (14a, 14b) à des points d'ancrage respectifs dans la nacelle comprend la séparation des pièces de hissage (16) du crochet de grue d'éolienne (7) une fois que les pièces d'ancrage (15) sont reliées aux points d'ancrage respectifs.

4. Procédé selon une quelconque revendication précédente, dans lequel l'étape de liaison des accouplements de plateforme (13a, 13b) à la plateforme d'éolienne (3) comprend la liaison d'une boucle de rambarde (20) de chaque accouplement de plateforme autour d'une poutre (31) d'une rambarde sur la plateforme d'éolienne (3) destinée à ancrer le câble (12a, 12b) à la rambarde.

5. Procédé selon l'une quelconque des revendications 1 à 3, dans lequel l'étape de liaison des accouplements de plateforme (13a, 13b) à la plateforme d'éolienne (3) comprend l'ancrage de chaque accouplement de plateforme à un point d'ancrage (36) sur la plateforme d'éolienne.

6. Procédé selon la revendication 5, dans lequel l'étape d'ancrage de chaque accouplement de plateforme (13a, 13b) comprend la fixation d'une base (34) à un point d'ancrage (36) sur la plateforme d'éolienne (3) à l'aide d'une liaison d'ancrage prévu sur la base (34) ; et
la liaison des accouplements de plateforme (13a, 13b) d'un ou plusieurs ensembles de fils de guidage, respectivement, à un ou plusieurs liaisons d'accouplement (35a, 35b) prévus sur la base.

7. Appareil de guidage de générateur d'éolienne en mer destiné à être utilisé dans le procédé selon une quelconque revendication précédente, l'Appareil comprenant :
un ou plusieurs ensembles de fils de guidage (11a, 11b) comprenant chacun un accouplement de nacelle (14a, 14b) destiné à être relié à un point d'ancrage dans la nacelle, un accouplement de plateforme (13a, 13b) destiné à être relié à la plateforme d'éolienne, et un câble (12a, 12b) reliant l'accouplement de nacelle et l'accouplement de plateforme, dans lequel un accouplement parmi l'accouplement de nacelle (14a, 14b) et l'accouplement de plateforme (13a, 13b) comprend un tendeur (19) destiné à tirer le câble (12a, 12b) tendu entre ses accouplements de nacelle et de plateforme ; et
un harnais (9) destiné à être fixé à la charge (8) et comprenant un ou plusieurs accouplements coulissants (91a, 91b) destinés à amarrer de manière coulissante la charge aux câbles du ou des ensembles de fils de guidage (11a, 11b), respectivement, afin de limiter son mouvement latéral par rapport aux câbles lorsqu'elle est hissée.

8. Appareil de guidage de générateur d'éolienne en mer selon la revendication 7, dans lequel le ou les ensembles de fils de guidage (11a, 11b) comprennent des premier et second ensembles de fils de guidage.

9. Appareil de guidage de générateur d'éolienne en mer selon la revendication 7 ou 8, dans lequel les accouplements de nacelle (14a, 14b) comprennent chacun une pièce de hissage (16) destinée à liaison à un crochet de grue d'éolienne (7) et une pièce d'ancrage (15), dans lequel la pièce de hissage et la pièce d'ancrage sont conçues de sorte que la pièce d'ancrage peut être reliée au point d'ancrage pendant que la pièce de hissage est reliée au crochet de grue d'éolienne.

10. Appareil de guidage de générateur d'éolienne en mer selon la revendication 9, dans lequel les pièces de levage (16) et d'ancrage (16) comprennent au moins un crochet et/ou une boucle d'œillet.

11. Appareil de guidage de générateur d'éolienne en mer selon la revendication des revendications 7 à 10, dans lequel les accouplements de plateforme (13a, 13b) comprennent chacun une boucle de rambarde (20) pouvant être reliée autour d'une poutre (31) d'une rambarde sur la plateforme d'éolienne (3) destinée à ancrer le câble (12a, 12b) à la rambarde.

12. Appareil de guidage de générateur d'éolienne en mer selon la revendication 11, dans lequel les accouplements de plateforme (13a, 13b) comprennent chacun une attache à boucle destinée à attacher la boucle de rambarde autour de la poutre (31) de la rambarde.

13. Appareil de guidage de générateur d'éolienne en mer selon l'une quelconque des revendications 7 à 10, comprenant en outre une base (34) présentant un liaison d'ancrage destiné à fixer la base à un point d'ancrage (36) sur la plateforme d'éolienne et un ou plusieurs liaisons d'accouplement (35a, 35b) destinés à la liaison aux accouplements de plateforme (13a, 13b) du ou des ensembles de fils de guidage, respectivement.

14. Appareil de guidage de générateur d'éolienne en mer selon la revendication 13, dans lequel une première liaison d'accouplement (35a) est prévue sur un premier côté de la base (34) et une seconde liaison d'accouplement (35b) est prévue sur un second côté de la base (34), distal par rapport au premier côté.

15. Appareil de guidage de générateur d'éolienne en mer selon l'une quelconque des revendications 7 à 13, dans lequel les câbles (12a, 12b) du ou des ensembles de fils de guidage (11a, 11b) sont formés d'un câble présentant un module de Young dans la plage de 90 à 130 GPa.
